(19) Europäisches Patentamt
European Patent Office
Office européen des brevets

(11) **EP 3 712 775 A1**

(12) **DEMANDE DE BREVET EUROPEEN**

(43) Date de publication:
**23.09.2020 Bulletin 2020/39**

(21) Numéro de dépôt: **20162645.4**

(22) Date de dépôt: **12.03.2020**

(51) Int Cl.:
*G06F 12/02* (2006.01)     *G06N 3/04* (2006.01)
*G06N 3/063* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **20.03.2019 FR 1902855**

(71) Demandeur: **STMicroelectronics (Rousset) SAS
13790 Rousset (FR)**

(72) Inventeurs:
• **FOLLIOT, Laurent
06620 Gourdon (FR)**
• **DEMAJ, Pierre
06200 Nice (FR)**

(74) Mandataire: **Casalonga
Casalonga & Partners
Bayerstraße 71/73
80335 München (DE)**

(54) **PROCÉDÉ ET DISPOSITIF DE DÉTERMINATION DE LA TAILLE MÉMOIRE GLOBALE D'UNE ZONE MÉMOIRE GLOBALE ALLOUÉE AUX DONNÉES D'UN RÉSEAU DE NEURONES COMPTE TENU DE SA TOPOLOGIE**

(57) Procédé de détermination de la taille mémoire globale d'une zone mémoire globale (ZG) à allouer dans une mémoire (MV) destinée à stocker des données d'entrée et des données de sortie de chaque couche d'un réseau de neurones (RN), le procédé comprenant pour chaque couche courante du réseau postérieure à la première couche, une détermination d'une paire de zones mémoire élémentaires (ZA1, ZA2) à partir de chaque précédente zone mémoire élémentaire associée à la couche précédente, les deux zones mémoire élémentaires (ZA1, ZA2) de ladite paire ayant respectivement deux tailles mémoire élémentaires et étant toutes les deux destinées à stocker des données d'entrée et des données de sortie de ladite couche, les données de sortie étant stockées selon respectivement deux placements différents, la taille mémoire globale correspondant à la plus petite taille mémoire élémentaire en sortie de la dernière couche.

EP 3 712 775 A1

**Description**

Des modes de mise en œuvre et de réalisation de l'invention concernent les réseaux de neurones, par exemple les réseaux de neurones profonds, notamment l'apprentissage approfondi (en anglais « deep learning »), et plus particulièrement la détermination de la taille mémoire globale d'une zone mémoire globale à allouer dans une mémoire destinée à stocker des données d'entrée et des données de sortie de chaque couche d'un réseau de neurones.

Les réseaux de neurones sont massivement utilisés pour résoudre divers problèmes statistiques notamment le problème de la classification de données.

Après une phase d'apprentissage automatique généralement supervisée, c'est-à-dire sur une base de données de référence déjà classifiées, un réseau de neurones « apprend » et devient tout seul capable d'appliquer la même classification à des données inconnues.

On peut citer par exemple les réseaux de neurones à convolution ou CNN (« Convolutional Neural Networks » en anglais) qui sont un type de réseau de neurones dans lequel le motif de connexion entre les neurones est inspiré par le cortex visuel des animaux. Ils permettent avec efficacité la reconnaissance d'objets ou de personnes dans des images ou des vidéos.

Un réseau de neurones convolutif contient généralement quatre types de couche traitant successivement l'information :

- la couche de convolution qui traite par exemple des blocs de l'image les uns après les autres ;
- la couche non-linéaire qui permet d'améliorer la pertinence du résultat ;
- la couche de mise en commun (appelée « pooling ») qui permet de regroupe plusieurs neurones en un seul neurone ;
- la couche entièrement connectée (appelée « fully-connected » ou couche dense) qui relie tous les neurones d'une couche à tous les neurones de la couche précédente.

Chaque couche prend en entrée des données et délivre en sortie après traitement par ladite couche, des données de sortie (« features » en anglais).

La couche de convolution correspond généralement à un produit scalaire entre les neurones de la couche précédente et les poids du réseau de neurones. Elle constitue la première couche d'un réseau de neurones convolutif.

Par « poids », qui est un terme dont la signification dans le domaine des réseaux de neurones est bien connue de l'homme du métier, on entend des paramètres de neurones configurables pour obtenir de bonnes données de sortie.

Le but de la couche de convolution est de repérer la présence d'un ensemble de données spécifiques dans les images reçues en entrée. Pour cela, on réalise un filtrage par convolution. Le principe est de faire glisser une fenêtre représentant les données à détecter, et de calculer le produit de convolution entre la fenêtre et chaque portion de l'image balayée.

On obtient pour chaque produit de convolution, des données de sortie indiquant où se situent les données spécifiques sur l'image.

La couche de mise en commun est souvent placée entre deux couches de convolution. Elle reçoit en entrée les données de sortie de la couche de convolution à qui on applique une opération de « pooling » qui consiste à réduire la taille des données tout en préservant leurs caractéristiques importantes. Elle permet de réduire le nombre de paramètres et de calculs dans le réseau. On améliore par conséquent l'efficacité dudit réseau.

La couche entièrement connectée constitue la dernière couche d'un réseau de neurones convolutif ou non convolutif. Elle permet de classifier les données d'entrée du réseau de neurones.

Les architectures typiques de réseaux de neurones empilent quelques paires de couches de convolution et couches non-linéaires puis ajoutent une couche de pooling et répètent ce schéma jusqu'à obtenir des données de sortie de taille suffisamment petite, puis terminent par deux couches entièrement connectées.

Aujourd'hui, les réseaux de neurones sont de plus en plus complexes et requièrent un espace important en mémoire.

Plusieurs types de mémoire vive sont compatibles avec l'utilisation d'un réseau de neurones par exemple une mémoire TCM (« Tightly-Coupled Memory » en anglais) ou une mémoire vive statique (SRAM pour l'anglais « Static Random Access Memory ») ou une mémoire externe.

Si le réseau de neurones a besoin d'une grande mémoire, le système dans lequel le réseau de neurones est implémenté pourrait combiner plusieurs types de mémoire, par exemple la mémoire TCM avec la mémoire externe, ralentissant le temps d'exécution du réseau.

Il existe donc un besoin de limiter autant que possible, voire d'optimiser, la taille mémoire nécessaire à l'exécution du réseau de neurones.

L'optimisation de la taille mémoire conduit également à une optimisation de la surface du système et à une réduction de sa consommation d'énergie lors de l'exécution du réseau de neurones.

Une solution décrite dans la demande de brevet français déposée le 06/12/2018 sous le n°1872443, prévoit une optimisation de la taille mémoire de chaque zone mémoire élémentaire allouée à chaque couche. En d'autres termes, l'optimisation est réalisée couche par couche indépendamment de la topologie du réseau de neurones, ce qui permet de réduire la taille mémoire et par conséquent le temps d'exécution du réseau de neurones.

Il a été observé par les inventeurs que la réduction de la taille mémoire en fonction de l'architecture du réseau de neurones peut permettre de n'utiliser que la mémoire interne, diminuant ainsi le temps d'exécution du réseau de neurones de façon significative.

Ainsi, selon un mode de mise en œuvre et de réalisation, est-il proposé d'optimiser la taille mémoire nécessaire à l'exécution du réseau en fonction de la topologie dudit réseau dans le but d'avoir une taille mémoire adaptée à tout le réseau et non pas à chaque couche.

Selon un aspect, il est proposé un procédé de détermination de la taille mémoire globale d'une zone mémoire globale à allouer dans une mémoire destinée à stocker des données d'entrée et des données de sortie de chaque couche d'un réseau de neurones.

Le procédé comprend pour chaque couche courante du réseau postérieure à la première couche, une détermination d'une paire de zones mémoire élémentaires à partir de chaque précédente zone mémoire élémentaire associée à la couche précédente.

Les deux zones mémoire élémentaires de ladite paire ont respectivement deux tailles mémoire élémentaires et sont toutes les deux destinées à stocker des données d'entrée et des données de sortie de ladite couche, les données de sortie étant stockées selon respectivement deux placements différents.

La taille mémoire globale correspond à la plus petite taille mémoire élémentaire en sortie de la dernière couche.

Les données d'entrée et de sortie sont stockées dans des zones mémoire élémentaires associées à chaque couche postérieure à la première couche. Ces zones mémoire élémentaires sont avantageusement dans la mémoire RAM.

Pour chaque couche postérieure à la première couche, on détermine deux zones mémoire élémentaires stockant chacune les mêmes données d'entrée et de sortie. Seul le placement desdites données de sortie diffère entre les deux zones mémoire élémentaires.

Ces deux placements différents conduisent à deux tailles mémoire élémentaires différentes où l'une des deux sera plus avantageuse pour l'optimisation de la mémoire globale du réseau de neurones.

En sortie de la dernière couche, on obtient une pluralité de zones mémoire élémentaires ayant des tailles mémoire élémentaires différentes. La plus petite taille élémentaire entre ces tailles mémoire élémentaires sera sélectionnée pour représenter une taille mémoire globale d'une zone mémoire globale.

Par « zone mémoire globale » on entend par exemple une zone mémoire apte à stocker les données d'entrée et de sortie de l'ensemble des zones mémoire élémentaires desquelles la zone mémoire élémentaire ayant la plus petite taille élémentaire en sortie de la dernière couche résulte.

Ainsi le choix de la taille de la zone mémoire globale est effectué après avoir parcouru toutes les couches du réseau de neurones.

Selon un mode de mise en œuvre, il est possible, par exemple en fonction du type de couche, qu'au moins une des deux tailles mémoires élémentaires soit supérieure ou égale à la somme des tailles mémoire des données d'entrée et de sortie de ladite couche.

En ce qui concerne la première couche, deux variantes sont possibles selon que les données initiales subissent ou non un traitement de modification.

Ainsi, selon un mode de mise en œuvre, le procédé comprend un traitement initial des données initiales d'entrée du réseau de neurones, et dans ce cas on associe à la première couche une unique zone mémoire élémentaire destinée à stocker les données initiales traitées correspondant aux données d'entrée de la deuxième couche.

Par « traitement initial » on entend par exemple une mise en forme des données initiales ou un filtrage par convolution ou plus généralement toute opération modifiant lesdites données initiales.

Les deux zones mémoires élémentaires apparaissent alors dans ce cas dès la deuxième couche.

Selon un autre mode de mise en œuvre, correspondant à une absence de traitement initial sur les données initiales, on associe à la première couche, une paire de zones mémoires élémentaires déterminées à partir d'une zone mémoire ou mémoire tampon contenant les données initiales d'entrée du réseau de neurones.

Les deux zones mémoires élémentaires de la première couche sont toutes les deux destinées à stocker des données d'entrée et des données de sortie de ladite première couche, les données de sortie de la première couche étant stockées selon respectivement deux placements différents.

Ainsi, dans ce cas, puisque la première couche comprend deux zones mémoires élémentaires, on détermine dans la deuxième couche à partir de ces deux zones mémoires élémentaires de la première couche, une paire de zones mémoire élémentaires relative à chaque zone mémoire élémentaire de la première couche.

Selon un mode de mise en œuvre, les données d'entrée et de sortie d'au moins une des deux zones mémoire élémentaires de chaque paire peuvent être juxtaposées.

La juxtaposition des données d'entrée et de sortie d'une des deux zones mémoire élémentaires permet d'avoir une meilleure occupation mémoire.

Selon un mode de mise en œuvre, pour chaque couche courante postérieure à la première couche et incluant éventuellement la première couche (ceci est également vrai pour la première couche lorsqu'elle est déjà associée également à deux zones mémoires élémentaires), la détermination des deux tailles mémoire élémentaires des deux zones mémoire élémentaires de chaque paire et le placement des données de sortie dans ces deux zones mémoire élémentaires dépendent au moins du type de la couche courante.

En d'autres termes, en fonction du type de la couche par exemple une couche de convolution, dense, non-linéaire ou une couche de mise en commun, et/ou de la taille mémoire des données d'entrée et de sortie, et/ou de l'emplacement des données d'entrée, deux placements sont choisis.

Les deux zones mémoire élémentaires peuvent comporter avantageusement, en fonction par exemple du type de la couche, une zone mémoire additionnelle permettant d'éviter un écrasement des données utiles dans chaque zone mémoire élémentaire.

Selon un mode de mise en œuvre, pour chaque couche courante postérieure à la première couche et incluant éventuellement la première couche (ceci est également vrai pour la première couche lorsqu'elle est déjà associée également à deux zones mémoires élémentaires), la détermination des deux tailles mémoire élémentaires des deux zones mémoire élémentaires de chaque paire et le placement des données de sortie dans ces deux zones mémoire élémentaires dépendent de la fonction associée à la couche courante.

Par exemple, on peut citer comme fonction une conversion des données d'entrée ayant une taille de 16 bits vers une taille 8 bits ou 8 bits à 16 bits.

Les deux zones mémoire élémentaires peuvent comporter également dans ce cas en fonction du type de la fonction associée à la couche courante, une zone mémoire additionnelle permettant d'éviter un écrasement des données utiles dans chaque zone mémoire élémentaire.

Selon un mode de mise en œuvre, le procédé comprend en outre, après la détermination de la plus petite taille élémentaire en sortie de la dernière couche, un parcours des couches dudit réseau de la dernière couche à la première couche et dans lequel on extrait pour chaque couche, à partir de l'emplacement de la zone mémoire globale déterminée, l'adresse relative de chaque zone mémoire élémentaire de laquelle la zone mémoire globale résulte.

Le parcours des couches de la dernière à la première couche peut être réalisé par exemple par l'algorithme Viterbi connu de l'homme du métier.

Bien entendu, le parcours desdites couches peut être réalisé par tout algorithme qui a pour but de trouver la séquence de zones mémoire élémentaires la plus probable ayant produit la zone mémoire globale.

Lors de ce parcours, l'algorithme extrait l'adresse relative de chaque zone élémentaire sélectionnée.

On entend par « adresse relative », le décalage en mémoire par rapport à une adresse fixe relative à l'emplacement des données initiales d'entrée du réseau de neurones.

Selon un mode de mise en œuvre, pour chaque couche, on détermine l'adresse absolue de chaque zone mémoire élémentaire à partir de chaque adresse relative extraite.

Par « adresse absolue », on entend l'adresse de l'emplacement de la zone mémoire élémentaire sélectionnée dans la zone mémoire globale destinée à stocker les données d'entrée et de sortie du réseau de neurones.

Selon un mode de mise en œuvre, pour chaque couche courante postérieure à la première couche, les N zones mémoire élémentaires associées à ladite couche courante ayant les tailles mémoire les plus petites sont conservées.

Sans cette sélection, on se retrouve avec un nombre important de zones mémoire élémentaires qui peut être difficilement géré.

Restreindre le nombre de zones mémoire élémentaires pour chaque couche à N zones mémoire élémentaires permet non seulement de faciliter la gestion de celles-ci mais aussi de ne conserver que les zones mémoire élémentaires conduisant à une bonne optimisation mémoire du réseau de neurones.

Selon un mode de mise en œuvre, N est paramétrable.

N est par exemple paramétrable en fonction de la complexité du réseau de neurones et du dispositif l'exécutant.

On peut également lui donner une valeur par défaut par exemple 16.

Selon un autre aspect, il est proposé un dispositif comprenant une entrée destinée à recevoir des paramètres définissant les différentes couches successives d'un réseau de neurones, et des moyens de traitement couplés à ladite entrée, et destinés à déterminer la taille mémoire globale d'une zone mémoire globale à allouer dans une mémoire destinée à stocker des données d'entrée et des données de sortie de chaque couche du réseau de neurones.

Les moyens de traitement sont configurés pour déterminer, pour chaque couche postérieure à la première couche, une paire de zones mémoire élémentaires à partir de chaque précédente zone mémoire élémentaire associée à la couche précédente, ayant respectivement une première et une seconde taille mémoire élémentaire et étant chacune destinée à stocker des données d'entrée et des données de sortie de ladite couche, les données de sortie étant stockées selon deux placements différents, la taille mémoire globale correspondant à la plus petite taille mémoire élémentaire en sortie de la dernière couche du réseau de neurones.

Selon un mode de réalisation, au moins une des deux tailles élémentaires est supérieure ou égale à la somme de la taille mémoire des données d'entrée et de sortie

Selon un mode de réalisation, les moyens de traitement sont configurés pour effectuer un traitement initial des données initiales d'entrée du réseau de neurones, une unique zone mémoire élémentaire étant associée à la première couche comprenant les données initiales traitées correspondant aux données d'entrée de la deuxième couche.

Selon un mode de réalisation, les moyens de traitement sont configurés pour associer à la première couche, une paire de zones mémoires élémentaires déterminées à partir d'une zone mémoire ou mémoire tampon contenant les données initiales d'entrée du réseau de neurones.

Selon un mode de réalisation, les moyens de traitement sont configurés pour juxtaposer les données d'entrée et les données de sortie d'au moins une des deux zones mémoire élémentaires.

Selon un mode de réalisation, pour chaque couche postérieure à la première couche et incluant éventuellement la première couche, les moyens de traitement sont configurés pour déterminer le placement des données de sortie des deux zones mémoire élémentaires en fonction au moins du type de la couche.

Selon un mode de réalisation, pour chaque couche postérieure à la première couche et incluant éventuellement la première couche, les moyens de traitement sont configurés pour déterminer le placement des données de sortie des deux zones mémoire élémentaires selon la fonction associée à la couche.

Selon un mode de réalisation, après avoir déterminé la plus petite taille élémentaire en sortie de la dernière couche, les moyens de traitement sont configurés pour parcourir les couches dudit réseau de neurones de la dernière couche à la première couche, et sont configurés pour extraire pour chaque couche, à partir de l'emplacement de la zone mémoire globale déterminée, l'adresse relative de chaque zone mémoire élémentaire de laquelle la zone mémoire globale résulte.

Selon un mode de réalisation, les moyens de traitement sont configurés pour déterminer pour chaque couche l'adresse absolue de chaque zone mémoire élémentaire à partir de chaque adresse relative extraite.

Selon un mode de réalisation, les moyens de traitement sont configurés pour conserver, pour chaque couche postérieure à la première couche, les N zones mémoire élémentaires associée à ladite couche ayant les tailles mémoire les plus petites.

Selon un mode de réalisation, N est paramétrable.

Selon un autre aspect, il est également proposé un microcontrôleur comportant ledit dispositif tel que défini ci-avant.

D'autres avantages et caractéristiques de l'invention apparaîtront à la lecture de la description détaillée de modes de mise en œuvre et de réalisation, nullement limitatifs, et des dessins annexés sur lesquels :

[Fig 1] illustre schématiquement un mode de réalisation de l'invention,
[Fig 2] illustre schématiquement un mode de mise en œuvre de l'invention,
[Fig 3] illustre schématiquement un mode de mise en œuvre de l'invention,
[Fig 4] illustre schématiquement un mode de mise en œuvre de l'invention,
[Fig 5A] illustre schématiquement un mode de mise en œuvre de l'invention,
[Fig 5B] illustre schématiquement un mode de mise en œuvre de l'invention,
[Fig 5C] illustre schématiquement un mode de mise en œuvre de l'invention,
[Fig 6] illustre schématiquement un mode de mise en œuvre de l'invention,
[Fig 7] illustre schématiquement un mode de mise en œuvre de l'invention.

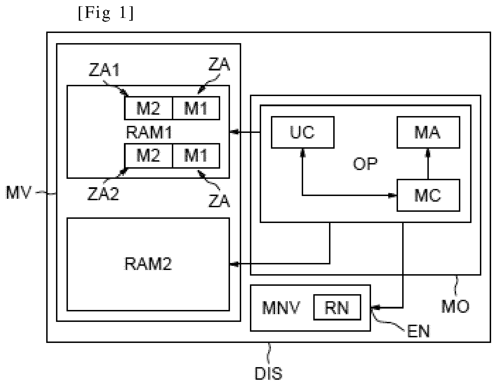

Sur la figure 1, la référence DIS désigne un dispositif par exemple un microcontrôleur, un générateur de code ou tout autre objet pouvant contenir une architecture logicielle embarquée ou matérielle.

Le dispositif DIS peut également être un module intégré à un ordinateur.

Ledit dispositif comprend une mémoire volatile MV par exemple une mémoire RAM (pour « Random Access Memory » en anglais). Ici, la mémoire volatile MV comprend une première mémoire RAM1 et une deuxième mémoire RAM2.

Bien entendu, ladite mémoire volatile MV peut comprendre plus de deux mémoires.

Le dispositif DIS comprend également une mémoire non-volatile MNV comprenant une entrée EN destinée à recevoir les différents paramètres définissant l'architecture d'un réseau de neurones RN, c'est-à-dire la configuration de ses couches et ses poids.

La mémoire non-volatile MNV est également configurée pour recevoir une suite d'instructions définissant un algorithme, avantageusement un algorithme de Viterbi dont le fonctionnement sera détaillé ci-après.

La mémoire volatile MV est configurée pour stocker dans une des deux mémoires RAM1 et RAM2, les données d'entrée et de sortie de la couche courante destinées à occuper une zone mémoire élémentaire ZA.

Le dispositif DIS comprend un module MO configuré pour réaliser des actions déterminées.

Le module MO comprend des moyens de traitement OP configurés pour déterminer la taille mémoire globale d'une zone mémoire globale à allouer comprenant l'ensemble des zones mémoire élémentaires ZA sélectionnées en fonction de la plus petite taille mémoire élémentaire ZA en sortie de la dernière couche du réseau de neurones RN, dans la mémoire volatile MV.

Pour cela, les moyens de traitement OP sont couplés aux deux mémoires RAM1 et RAM2, et sont configurés pour déterminer, pour chaque couche du réseau de neurones postérieure à la première couche une paire de zones mémoire élémentaires ZA1 et ZA2 ayant respectivement une première et une seconde taille mémoire élémentaire.

Les deux zones mémoire élémentaires sont destinées à stocker des données d'entrée et des données de sortie de ladite couche selon deux placements différents.

Les moyens de traitement OP comprennent une unité de calcul UC, des moyens de commande MC et des moyens d'allocation MA.

Les moyens de traitement OP sont couplés à la mémoire non-volatile MNV par l'entrée EN pour permettre à l'unité de calcul UC de récupérer les paramètres relatifs aux couches et aux opérations du réseau de neurones RN.

Ladite unité de calcul UC comprend par exemple un microprocesseur configuré pour réaliser les calculs nécessaires à la détermination des deux tailles mémoire élémentaires des deux zones mémoire élémentaires ZA1 et ZA2.

L'unité de calcul UC est configurée pour envoyer les résultats desdits calculs aux moyens de commande MC.

Les moyens de commande MC sont configurés pour choisir

- en fonction des résultats de calcul, pour chaque couche postérieure à la première couche, les deux placements des données de sortie pour chaque zone mémoire élémentaire ZA1 et ZA2 et
- la taille mémoire globale de la zone mémoire globale à allouer comprenant l'ensemble des zones mémoire élémentaires ZA sélectionnées en fonction de la plus petite taille mémoire élémentaire ZA en sortie de la dernière couche du réseau de neurones RN.

Lesdits moyens de commande MC sont couplés aux moyens d'allocation MA qui sont configurés pour allouer ladite zone mémoire globale comprenant l'ensemble des zones mémoire élémentaires ZA ainsi sélectionnées après autorisation des moyens de commande MC.

Pour faire cette sélection, l'unité de calcul UC est configurée pour exécuter ledit algorithme dont les instructions sont stockées dans la mémoire non-volatile MV.

Les moyens de commande MC et d'allocation MA peuvent être par exemple réalisés par des modules logiciels au sein du microprocesseur et/ou par des circuits logiques spécifiques.

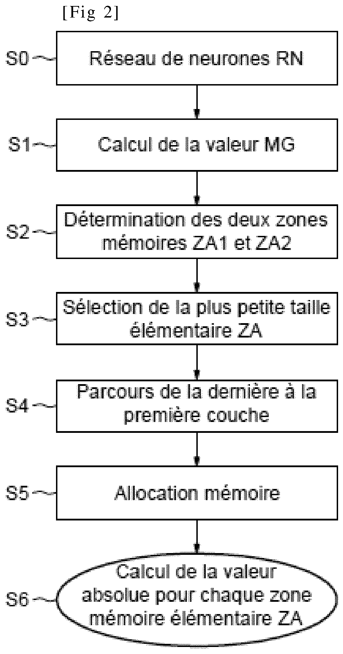

La figure 2 représente un diagramme de flux des différentes étapes conduisant à la détermination et à l'allocation de la taille mémoire globale de la zone mémoire globale comprenant l'ensemble des zones mémoire élémentaires sélectionnées ZA.

L'étape S0 comprend la réception de l'architecture du réseau de neurones RN par l'entrée RN pour être stockée dans la mémoire non-volatile MNV.

Les moyens de commande MC sont configurés pour extraire ladite architecture, c'est-à-dire la configuration des couches, des opérations entre les couches et des poids du réseau de neurones RN.

Les moyens de commande MC sont ensuite configurés pour envoyer la configuration de chaque couche postérieure à la première couche à l'unité de calcul UC configurée pour calculer une valeur MG associée au type de ladite couche et/ou à l'opération réalisée par la couche dans l'étape S1.

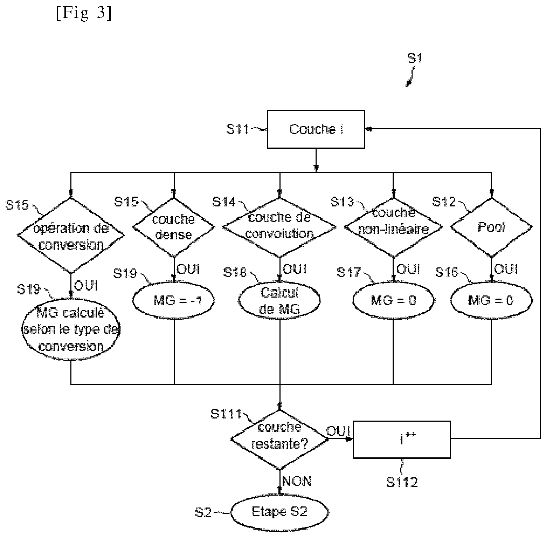

Le calcul sera détaillé dans la figure 3.

La valeur MG permet de déterminer les placements possibles des données de sortie M2 de la couche pour les zones mémoire élémentaires ZA1 et ZA2 associées à ladite couche. Le placement des données d'entrée M1 est initialement déterminé.

La valeur MG calculée représente également une taille mémoire additionnelle de la zone mémoire élémentaire ZA.

L'étape S1 est répétée pour toutes les couches postérieures à la première couche du réseau de neurones RN.

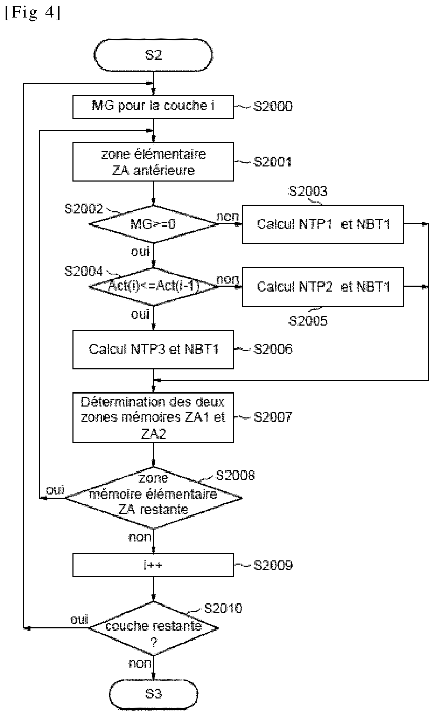

Les moyens de commande MC choisissent ensuite dans l'étape S2 les deux placements pour chaque zone mémoire élémentaire ZA1, ZA2. L'étape S2 sera détaillée dans la figure 4.

La détermination des deux placements est également répétée pour toutes les couches postérieures à la première couche du réseau de neurones RN une fois l'étape S1 terminée.

Les moyens de commande MC sélectionnent ensuite à l'étape S3 la taille mémoire globale correspondant à la plus petite taille mémoire élémentaire ZA en sortie de la dernière couche du réseau de neurones RN.

A L'étape S4, les moyens de commande MC autorisent l'unité de calcul UC à exécuter ledit algorithme par exemple l'algorithme Viterbi pour parcourir les couches dudit réseau de neurones RN de la dernière couche à la première couche et extraire pour chaque couche à partir dudit emplacement de la zone mémoire globale déterminée, l'adresse relative de chaque zone mémoire élémentaire ZA de laquelle la zone mémoire globale résulte.

On entend par « adresse relative », le décalage en mémoire par rapport à une adresse fixe relative à l'emplacement des données initiales d'entrée du réseau de neurones RN.

Bien entendu, le parcours desdites couches peut être réalisé par tout algorithme qui a pour but de trouver la séquence de zones mémoire élémentaires la plus probable ayant produit la zone mémoire globale.

Dans l'étape S5, les moyens de commande MC autorisent les moyens d'allocation MA à allouer ladite zone mémoire globale ayant une taille égale à la plus petite taille mémoire élémentaire ZA en sortie de la dernière couche du réseau de neurones.

Une fois le bloc de la zone mémoire globale alloué, l'unité de calcul UC est configurée pour calculer les adresses absolues de chaque zone mémoire élémentaire ZA sélectionnée dans l'étape S6.

Par « adresse absolue », on entend l'adresse de l'emplacement de la zone mémoire élémentaire sélectionnée dans la zone mémoire globale destinée à stocker les données d'entrée et de sortie du réseau de neurones.

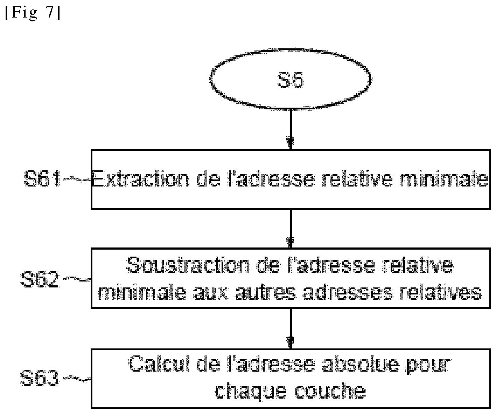

Ledit calcul est détaillé dans la figure 7.

La figure 3 illustre un diagramme de flux détaillé de l'étape S1.

Dans l'étape S11, la configuration de chaque couche i postérieure à la première couche du réseau de neurones RN est envoyée à l'unité de calcul UC.

Si ladite couche i est dans une couche dense (S15), la valeur MG sera égale à -1 dans S19.

Si la couche i est une couche de convolution (S14), la valeur MG est calculée. Elle peut être négative, positive ou égale à 0 dans S18. La valeur MG est par exemple calculée selon la formule ci-dessous :

$$MG = (CEIL(CONV1\_PADX+1, \quad CONV1\_STRIDEX) \quad + \quad CONV1\_OUT\_DIM\_X \times CEIL(CONV1\_PADY+1, CONV1\_STRIDEY)) \times CONV1\_OUT\_CH),$$

dans laquelle :

CEIL est une fonction qui permet d'arrondir un nombre jusqu'au nombre entier supérieur.
CONV_PADX est une variable qui représente le nombre de zéros ajoutés horizontalement en parlant de la gauche.
CONV1_STRIDEX est une variable qui représente le pas de déplacement horizontal du noyau de convolution.
CONV1_OUT_DIM_X est une variable qui représente la taille des données de sortie pour la dimension horizontale.
CONV1_STRIDEY représente le pas de déplacement vertical du noyau de convolution.
CONV1_OUT_CH représente le nombre de canaux de sortie.

Si la couche i est une couche non-linéaire (S13), la valeur MG est égale à 0 dans S17 et si la couche est une couche de mise en commun (S12), la valeur MG est également égale à 0 dans S 16.

La couche i peut également être une couche « Soft Max » connue de l'homme du métier. Dans ce cas, la valeur MG est également égale à 0.

Si la couche i permet par exemple de réaliser une opération de conversion (S20) des données d'entrée, la valeur MG est également calculée dans S21 en fonction du type de conversion.

Par exemple, si c'est une conversion 16 bits à 8 bits, la valeur MG est égale à 0. Si c'est une conversion 8 bits à 16 bits, la valeur MG est égale à la taille des données d'entrée.

Si c'est une conversion 16 bits à 32 bits, la valeur MG est égale à la taille des données d'entrée.

Si c'est une conversion 8 bits à 32 bits, la valeur MG est égale à 3 fois la taille des données d'entrée et si c'est une conversion 32 bits à 8 ou 16 bits, la valeur MG est égale à 0.

Bien sûr, la valeur MG est également déterminée selon d'autres types d'opération tant qu'elles sont détectables par l'unité de calcul UC.

Les moyens de commande MC vérifient lors de l'étape S111, s'il y a encore des couches du réseau de neurones RN à traiter.

Si oui, les moyens de commande MC autorisent, dans l'étape S112, l'unité de calcul UC à extraire la configuration d'une des couches restantes. Si non, on passe à l'étape S2.

La figure 4 illustre un diagramme de flux détaillé de l'étape S2.

Pour chaque couche i postérieure à la première couche du réseau de neurones RN, les moyens de commande MC récupèrent la valeur MG calculée par l'unité de calcul UC à l'étape S2000.

A l'étape S2001, les moyens de commande MC récupèrent les données relatives à la précédente zone mémoire élémentaire ZA de la précédente couche i-1 c'est-à-dire les emplacements des données de sortie qui représentent les données d'entrée de la couche i.

S'il y a au moins deux précédentes zones mémoire élémentaires ZA, les moyens de commande MC commencent par récupérer les données relatives à la zone mémoire élémentaire ZA qui a la plus petite taille et procèdent à l'exécution d'instructions qui seront décrites ci-après.

Ces instructions sont répétées pour toutes les zones mémoire élémentaires de la couche i-1 et cela par ordre croissant.

A l'étape S2002, les moyens de commande MC vérifient si la valeur MG est supérieure ou égale à 0. Si non, les moyens de commande MC autorisent à l'étape S2003 l'unité de calcul UC à effectuer un premier calcul d'une première valeur mémoire NTP1 représentative de l'adresse minimale de la zone mémoire élémentaire ZA1 et selon la formule suivante :

$$NTP1 = MIN(TP, ZA\_TP - Act(i))$$

Dans laquelle :

MIN représente l'opération permettant de retenir la plus petite valeur entre les deux arguments TP, ZA_TP - Act(i),
TP représente l'adresse minimale de la zone mémoire élémentaire précédente ZA de la couche i-1,
ZA_TP représente l'adresse minimale des données d'entrée de la couche i et ;
Act(i) représente la taille des données de sortie de la couche i.

Les moyens de commande MC autorisent également l'unité de calcul UC à effectuer un deuxième calcul d'une deuxième valeur mémoire NBT1 représentative de l'adresse maximale de la zone mémoire élémentaire ZA2 et selon la formule suivante :

$$NBT1 = MAX(BT, ZA\_BT+Act(i))$$

Dans laquelle :

MAX représente l'opération permettant de retenir la plus grande valeur entre les deux arguments BT et ZA_BT+Act(i-1),
BT est l'adresse maximale de la zone mémoire élémentaire précédente ZA de la couche i-1,
ZA_BT représente l'adresse maximale des données d'entrée de la couche i et ;
Act(i) représente la taille des données de sortie de la couche i.

Lesdites premières et deuxièmes valeurs mémoire NTP1, NBT1 permettent de déterminer les deux placements des données de sortie des deux zones mémoire ZA1 et ZA2 associées à la couche i.

Si la valeur MG est supérieure ou égale à 0, les moyens de commande MC vérifient à l'étape S2004 si la taille mémoire des données de sortie Act(i-1) de la couche i-1 est supérieure ou égale à la taille des données de sortie Act(i) de la couche i.

Si la taille mémoire des données de sortie Act(i) de la couche i est strictement supérieure à la taille mémoire des données de sortie Act(i-1) de la couche i-1, on passe à l'étape S2005. Si non, on passe à l'étape S2006.

Dans l'étape S2005, les moyens de commande MC autorisent l'unité de calcul UC à effectuer un troisième calcul d'une troisième valeur mémoire NTP2 représentative de l'adresse minimale de la zone mémoire élémentaire ZA1 et selon la formule suivante :

$$NTP2 = MIN(TP, ZA\_BT - Act(i) - MG(i))$$

Dans laquelle :

MIN représente l'opération permettant de retenir la plus petite valeur entre les deux arguments TP, ZA_BT- Act(i) - MG(i).
TP représente l'adresse minimale de la zone mémoire élémentaire précédente ZA de la couche i-1,
ZA_BT représente l'adresse maximale des données d'entrée de la couche i,
Act(i) représente la taille des données de sortie de la couche i et ;
MG(i) représente la taille additionnelle correspondant à la valeur MG.

L'unité de calcul UC réalise également ici ledit deuxième calcul de la deuxième valeur NBT1 selon la même formule.

Lesdites deuxièmes et troisièmes valeurs mémoire NBT1, NTP2 permettent de déterminer les deux placements des données de sortie des deux zones mémoire ZA1 et ZA2 associées à la couche i.

Dans l'étape S2006, les moyens de commande MC autorisent l'unité de calcul UC à effectuer un quatrième calcul d'une quatrième valeur mémoire NTP3 représentative de l'adresse minimale de la zone mémoire élémentaire ZA1 et selon la formule suivante :

$$ NTP3 = MIN(TP, ZA\_TP - Act(i)) $$

Dans laquelle :

MIN représente l'opération permettant de retenir la plus petite valeur entre les deux arguments TP, ZA_TP- Act(i).
TP représente l'adresse minimale de la zone mémoire élémentaire précédente ZA de la couche i-1,
ZA_TP représente l'adresse minimale des données d'entrée de la couche i et ;
Act(i) représente la taille des données de sortie de la couche i.

L'unité de calcul UC réalise également dans cette étape ledit deuxième calcul de la deuxième valeur NBT1 selon la même formule.

Lesdites deuxièmes et quatrièmes valeurs mémoire NBT1, NTP3 permettent de déterminer les deux placements des données de sortie des deux zones mémoire ZA1 et ZA2 associées à ladite couche i.

A partir de l'une des étapes S2003, S2005 ou S2006, les moyens de commande MC passent ensuite à l'étape S2007 dans laquelle, en fonction des résultats desdits calculs, les moyens de commande MC déterminent les deux placements ZA1 et ZA2.

Une fois cela fait, les moyens de commande MC vérifient à l'étape S2008 s'il reste dans ladite couche i-1, une autre zone mémoire élémentaire ZA à traiter.

Si oui, on revient à l'étape S2001. Si non, les moyens de commande MC incrémente la valeur i à l'étape S2009 et vérifient à l'étape S2010 s'il y a des couches restantes dans le réseau de neurones RN.

Si oui, on passe à l'étape S2000 pour récupérer la valeur MG de la nouvelle couche i. Si non, on passe à l'étape S3 pour déterminer la plus petite taille élémentaire en sortie de la dernière couche.

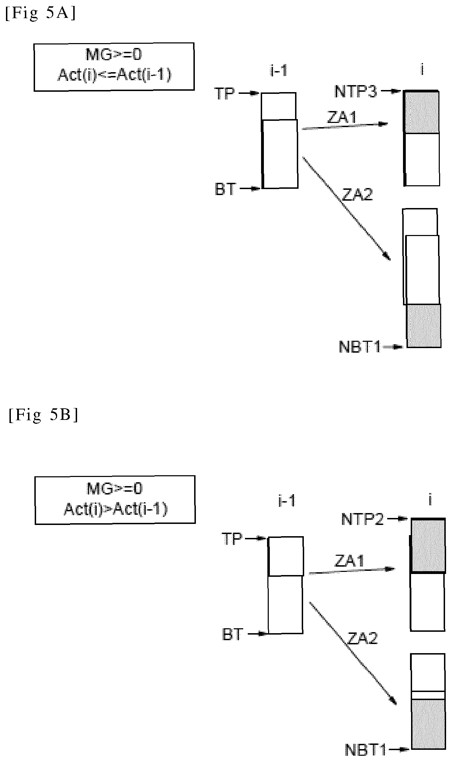

Les figures 5A à 5C représentent des exemples des placements des données de sortie des deux zones mémoire élémentaires ZA1 et ZA2.

Par exemple, dans la figure 5A, la valeur MG est supérieure ou égale à 0 et la taille des données de sortie Act(i) de la couche i est inférieure à la taille des données de sortie Act(i-1) de la couche précédente i-1.

Les moyens de commande MC déterminent un premier et un deuxième placement des données de sortie des deux zones mémoire élémentaires ZA1 et ZA2 comme illustré.

La taille des données de sortie de la couche i ne dépasse pas la limite supérieure prévue par la quatrième valeur mémoire NTP3 dans la zone mémoire élémentaire ZA1.

La taille des données de sortie de la couche i ne dépasse pas non plus la limite inférieure prévue par la première valeur mémoire NBT1 dans la zone mémoire élémentaire ZA2.

Par conséquent, les données d'entrée et de sortie de la zone mémoire élémentaire ZA2 sont juxtaposées ce qui permet d'avoir une meilleure occupation mémoire. La taille de zone mémoire élémentaire ZA2 est ici supérieure à la somme des tailles des données d'entrée et des données de sortie.

Dans la figure 5B, la valeur MG est supérieure ou égale à 0 et la taille des données de sortie Act(i) de la couche i est supérieure à la taille des données de sortie Act(i-1) de la couche précédente i-1, les moyens de commande MC déterminent un premier et un deuxième placement des données de sortie des deux zones mémoire élémentaires ZA1 et ZA2 comme illustré.

La taille des données de sortie de la couche i ne dépasse pas la limite supérieure prévue par la quatrième valeur mémoire NTP2 dans la zone mémoire élémentaire ZA1.

La taille des données de sortie de la couche i ne dépasse pas non plus la limite inférieure prévue par la première valeur mémoire NBT1 dans la zone mémoire élémentaire ZA2.

Par conséquent, les données d'entrée et de sortie de la zone mémoire élémentaire ZA2 sont ici juxtaposées ce qui permet d'avoir une meilleure occupation mémoire. La taille de la zone mémoire élémentaire ZA2 est ici supérieure à la somme de la taille des données d'entrée et des données de sortie.

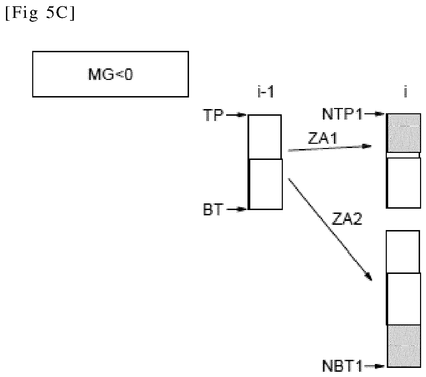

Dans la figure 5C, la valeur MG est strictement inférieure à 0.

Les données de sortie de la couche i ne dépassent pas la limite supérieure prévue par la première valeur mémoire NTP1 dans la zone mémoire élémentaire ZA1.

Les données de sortie de la couche i ne dépassent pas non plus la limite inférieure prévue par la première valeur mémoire NBT1 dans la zone mémoire élémentaire ZA2.

Par conséquent, les données d'entrée et de sortie de la zone mémoire élémentaire ZA2 sont ici juxtaposées ce qui permet d'avoir une meilleure occupation mémoire. La taille de la zone mémoire élémentaire ZA2 est ici supérieure à la somme de la taille des données d'entrée et des données de sortie.

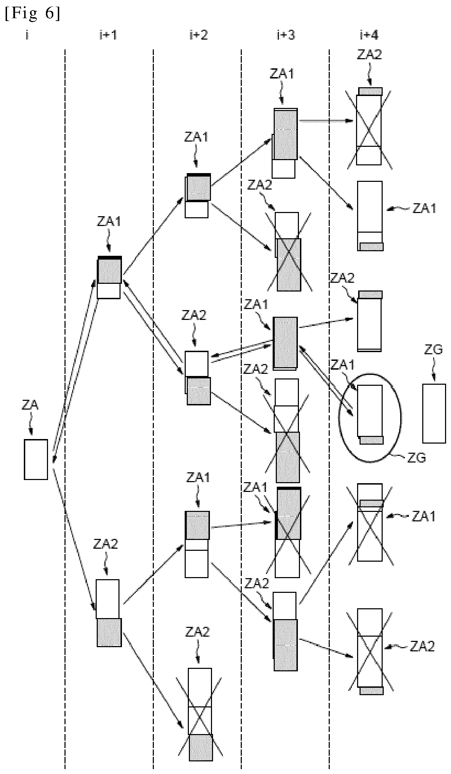

La figure 6 représente une vue d'ensemble des étapes S2 à S4 pour les couches allant de i à i + 4, avec i = 1.

La couche i qui est ici la première couche du réseau comprend une zone mémoire élémentaire ZA comportant des données initiales d'entrée du réseau de neurones traitées et correspondant aux données d'entrée de la couche i + 1.

A la couche i + 1, les moyens de commande MC déterminent les deux placements des données de sortie des deux zones mémoire élémentaires ZA1 et ZA2 associées à ladite couche i + 1.

La taille de la zone élémentaire ZA2 est ici supérieure à la somme des tailles mémoire des données d'entrée et de sortie de ladite couche i + 1. On peut voir aussi que les données d'entrée et les données de sortie sont juxtaposées.

A la couche i + 2, les moyens de commande MC déterminent deux nouvelles zones mémoire élémentaires ZA1 et ZA2 à partir de la zone mémoire élémentaire ZA1 de la couche i + 1 et déterminent également deux nouvelles zones mémoire élémentaires ZA1 et ZA2 à partir de la zone mémoire élémentaire ZA2 de la couche i + 1.

On a donc 4 zones mémoire élémentaires dans la couche i + 2.

On peut également voir qu'au niveau des deux zones mémoire ZA2 de la couche i + 2, les données d'entrée et de sortie sont juxtaposées et que la taille de chaque zone mémoire élémentaire ZA2 est supérieure ou égale à la somme des tailles mémoire des données d'entrée et de sortie de la couche i + 2.

Dans certains cas, on peut également avoir une zone mémoire élémentaire, associée à une couche du réseau de neurones, dont la taille est égale à la somme des tailles mémoire des données d'entrée et de sortie de la couche.

Dans le but de ne pas se retrouver avec un nombre important de zones mémoire élémentaires qui ne peut pas être géré, restreindre le nombre de zones mémoire élémentaires pour chaque couche à N zones mémoire élémentaires permet non seulement de faciliter la gestion de celles-ci mais aussi de ne conserver que les zones mémoire élémentaires conduisant à une bonne optimisation mémoire du réseau de neurones.

On peut par exemple conserver N zones mémoire élémentaires associées à la couche i + 1.

N étant paramétrable, on choisit de conserver ici les trois plus petites zones mémoire élémentaires ZA.

Une autre alternative consiste à générer N zones mémoires élémentaires associées à ladite couche.

A la couche i + 3, les moyens de commande MC déterminent deux nouvelles zones mémoire élémentaires ZA1 et ZA2 à partir de chaque zone mémoire élémentaire conservée dans la couche i + 2.

On peut également ici conserver N zones mémoire élémentaires ZA par exemple 3.

Ainsi, on a trois zones mémoire élémentaires conservées au lieu de 6.

La couche i + 4 représente ici la dernière couche du réseau de neurones RN.

Après avoir déterminé les zones mémoire élémentaires ZA1 et ZA2 par rapport à chaque zone élémentaire ZA associée à la couche i+3, on peut également conserver N zones mémoire élémentaires ici 3.

On a donc trois zones mémoire élémentaires conservées au lieu de 6.

A partir des zones mémoire élémentaires conservées, les moyens de commande MC sélectionnent la zone mémoire élémentaire ayant la plus petite taille mémoire élémentaire ici ZG.

Cette zone mémoire élémentaire ZG a une taille mémoire élémentaire minimale qui correspond à la taille mémoire globale à allouer pour le réseau de neurones.

Les moyens de commande MC autorisent ensuite l'unité de calcul UC à exécuter ledit algorithme par exemple l'algorithme Viterbi pour parcourir les couches dudit réseau de neurones RN de la dernière couche i + 4 à la première couche i et extraire pour chaque couche à partir dudit emplacement de la zone mémoire globale ZG déterminée, l'adresse relative de chaque zone mémoire élémentaire ZA de laquelle la zone mémoire globale résulte.

Bien entendu, si ladite zone mémoire élémentaire ZA comprend des données initiales d'entrée du réseau de neurones non traitées cela équivaut à considérer la couche i+1 comme la première couche du réseau de neurones RN.

Dans ce cas les données initiales non traitées sont stockées dans une unique zone mémoire ou mémoire tampon et les deux zones mémoires élémentaires de la première couche, dans ce cas la couche 2, sont déterminées comme indiqué ci-avant. Notamment s'applique à cette première couche tout ce qui a été décrit ci-avant en référence aux figures 3, 4, 5A et 5B pour une couche courante i postérieure à la première couche

La figure 7 illustre un diagramme de flux détaillant l'étape S6 comprenant le calcul des adresses absolues de chaque zone mémoire élémentaire ZA sélectionnée.

Pour cela, les moyens de commande MC déterminent l'adresse relative minimale entre les adresses relatives de toutes les zones mémoire élémentaires ZA sélectionnées dans l'étape S61 puis soustraient ladite valeur minimale aux autres adresses relatives des autres zones mémoire élémentaires ZA sélectionnées dans l'étape S62 pour générer des adresses relatives positives.

L'unité de calcul UC génère ensuite dans l'étape S63, pour chaque couche, une adresse absolue en prenant en compte l'adresse relative positive et l'adresse absolue de la zone mémoire globale.

Par ailleurs, l'invention n'est pas limitée à ces modes de réalisation et de mise en œuvre mais en embrasse toutes les variantes. A titre d'exemple, lors de l'entraînement du réseau de neurones, on peut déterminer des placements de gradients d'erreur ayant une taille sensiblement égale à la taille des données de sortie associées à chaque couche.

**Revendications**

1. Procédé de détermination de la taille mémoire globale d'une zone mémoire globale (ZG) à allouer dans une mémoire (MV) destinée à stocker des données d'entrée et des données de sortie de chaque couche d'un réseau de neurones (RN), le procédé comprenant pour chaque couche courante du réseau postérieure à la première couche, une détermination d'une paire de zones mémoire élémentaires (ZA1, ZA2) à partir de chaque précédente zone mémoire élémentaire associée à la couche précédente, les deux zones mémoire élémentaires (ZA1, ZA2) de ladite paire ayant respectivement deux tailles mémoire élémentaires et étant toutes les deux destinées à stocker des données d'entrée et des données de sortie de ladite couche, les données de sortie étant stockées selon respectivement deux placements différents, la taille mémoire globale correspondant à la plus petite taille mémoire élémentaire en sortie de la dernière couche.

2. Procédé selon la revendication 1, dans lequel au moins une des deux tailles mémoires élémentaires est supérieure ou égale à la somme des tailles mémoire des données d'entrée et de sortie de ladite couche.

3. Procédé selon la revendication 1 ou 2, comprenant un traitement initial des données initiales d'entrée du réseau de neurones, et dans lequel on associe à la première couche une unique zone mémoire élémentaire (ZA) destinée à stocker les données initiales traitées correspondant aux données d'entrée de la deuxième couche.

4. Procédé selon la revendication 1 ou 2, dans lequel on associe à la première couche, une paire de zones mémoires élémentaires (ZA1, ZA2) déterminées à partir d'une zone mémoire contenant des données initiales d'entrée du réseau de neurones (RN), les données de sortie de la première couche étant stockées selon respectivement deux placements différents.

5. Procédé selon l'une des revendications 1 à 4, dans lequel les données d'entrée et de sortie d'au moins une des deux zones mémoire élémentaires (ZA1, ZA2) de chaque paire sont juxtaposées.

6. Procédé selon l'une des revendications 1 à 5, dans lequel pour chaque couche courante postérieure à la première couche et incluant éventuellement la première couche, la détermination des deux tailles mémoire élémentaires des deux zones mémoire élémentaires (ZA1, ZA2) de chaque paire et le placement des données de sortie dans ces deux zones mémoire élémentaires (ZA1, ZA2) dépendent au moins du type de la couche courante.

7. Procédé selon l'une des revendications 1 à 5 dans lequel pour chaque couche courante postérieure à la première couche et incluant éventuellement la première couche, la détermination des deux tailles mémoire élémentaires des deux zones mémoire élémentaires de chaque paire (ZA1, ZA2) et le placement des données de sortie dans ces deux zones mémoire élémentaires (ZA1, ZA2) dépendent de la fonction associée à la couche courante.

8. Procédé selon l'une des revendications précédentes, comprenant en outre, après la détermination de la plus petite taille élémentaire (ZG) en sortie de la dernière couche, un parcours des couches dudit réseau (RN) de la dernière couche à la première couche et dans lequel on extrait pour chaque couche, à partir de l'emplacement de la zone mémoire globale déterminée (ZG), l'adresse relative de chaque zone mémoire élémentaire (ZA1, ZA2) par laquelle la zone mémoire globale (ZG) résulte.

9. Procédé selon la revendication 8, comprenant pour chaque couche, une détermination de l'adresse absolue de chaque zone mémoire élémentaire (ZA) à partir de chaque adresse relative extraite.

10. Procédé selon l'une des revendications précédentes, dans lequel, pour chaque couche courante postérieure à la première couche, les N zones mémoire élémentaires (ZA) associées à ladite couche courante ayant les tailles mémoire les plus petites sont conservées.

11. Procédé selon la revendication 10, dans lequel N est paramétrable.

12. Dispositif (DIS) comprenant une entrée (EN) destinée à recevoir des paramètres définissant les différentes couches successives d'un réseau de neurones (RN), et des moyens de traitement (OP) couplés à ladite entrée, et destinés à déterminer la taille mémoire globale d'une zone mémoire globale (ZG) à allouer dans une mémoire destinée à stocker des données d'entrée et des données de sortie de chaque couche du réseau de neurones (RN), les moyens de traitement (OP) étant configurés pour déterminer, pour chaque couche postérieure à la première couche, une paire de zones mémoire élémentaires (ZA1, ZA2) à partir de chaque précédente zone mémoire élémentaire (ZA) associée à la couche précédente, ayant respectivement une première et une seconde taille mémoire élémentaire et étant chacune destinée à stocker des données d'entrée et des données de sortie, les données de sortie étant stockées de ladite couche selon deux placements différents, la taille mémoire globale correspondant la plus petite taille mémoire élémentaire en sortie de la dernière couche du réseau de neurones.

13. Dispositif (DIS) selon la revendication 12, dans lequel au moins une des deux tailles élémentaires est supérieure ou égale à la somme de la taille mémoire des données d'entrée et de sortie.

14. Dispositif (DIS) selon la revendication 12 ou 13, dans lequel les moyens de traitement (OP) sont configurés pour effectuer un traitement initial des données initiales d'entrée du réseau de neurones, et dans lequel une unique zone mémoire élémentaire (ZA) est associée à la première couche comprenant les données initiales traitées correspondant aux données d'entrée de la deuxième couche.

15. Dispositif (DIS) selon la revendication 12 ou 13, dans lequel les moyens de traitement sont configurés pour associer à la première couche, une paire de zones mémoires élémentaires (ZA1, ZA2) déterminées à partir d'une zone mémoire contenant les données initiales d'entrée du réseau de neurones, les données de sortie de la première couche étant stockées selon respectivement deux placements différents.

16. Dispositif (DIS) selon l'une des revendications 12 à 15, dans lequel les moyens de traitement (OP) sont configurés pour juxtaposer les données d'entrée et les données de sortie d'au moins une des deux zones mémoire élémentaires (ZA1, ZA2).

17. Dispositif (DIS) selon l'une des revendications 12 à 16, dans lequel, pour chaque couche postérieure à la première couche et incluant éventuellement la première couche, les moyens de traitement (OP) sont configurés pour déterminer le placement des données de sortie des deux zones mémoire élémentaires (ZA1, ZA2) en fonction au moins du type de la couche.

18. Dispositif (DIS) selon l'une des revendications 12 à 16, dans lequel, pour chaque couche postérieure à la première couche et incluant éventuellement la première couche, les moyens de traitement (OP) sont configurés pour déterminer le placement des données de sortie des deux zones mémoire élémentaires (ZA1, ZA2) selon la fonction associée à la couche.

19. Dispositif (DIS) selon l'une des revendications 12 à 18, dans lequel après avoir déterminé la plus petite taille élémentaire en sortie de la dernière couche, les moyens de traitement (OP) sont configurés pour parcourir les couches dudit réseau de neurones (RN) de la dernière couche à la première couche, et sont configurés pour extraire pour chaque couche, à partir de l'emplacement de la zone mémoire globale déterminée (ZG), l'adresse relative de chaque zone mémoire élémentaire (ZA) de laquelle la zone mémoire globale (ZG) résulte.

20. Dispositif selon la revendication 19, dans lequel les moyens de traitement (OP) sont configurés pour déterminer pour chaque couche l'adresse absolue de chaque zone mémoire élémentaire (ZA) à partir de chaque adresse relative extraite.

21. Dispositif (DIS) selon l'une des revendications 12 à 20, dans lequel les moyens de traitement (OP) sont configurés pour conserver, pour chaque couche postérieure à la première couche, les N zones mémoire élémentaires (ZA) associées à ladite couche ayant les tailles mémoire les plus petites.

22. Dispositif (DIS) selon la revendication 21, dans lequel N est paramétrable.

23. Microcontrôleur, comportant un dispositif (DIS) selon l'une des revendications 12 à 22.

[Fig 1]

[Fig 2]

S0 — Réseau de neurones RN

S1 — Calcul de la valeur MG

S2 — Détermination des deux zones mémoires ZA1 et ZA2

S3 — Sélection de la plus petite taille élémentaire ZA

S4 — Parcours de la dernière à la première couche

S5 — Allocation mémoire

S6 — Calcul de la valeur absolue pour chaque zone mémoire élémentaire ZA

[Fig 3]

S1

S11 — Couche i

S15 — opération de conversion

S15 — couche dense

S14 — couche de convolution

S13 — couche non-linéaire

S12 — Pool

S19 — OUI
MG calculé selon le type de conversion

S19 — OUI
MG = -1

S18 — OUI
Calcul de MG

S17 — OUI
MG = 0

S16 — OUI
MG = 0

S111 — couche restante?

OUI

i⁺⁺

S112

NON

S2 — Etape S2

[Fig 4]

[Fig 5A]

[Fig 5B]

[Fig 5C]

[Fig 6]

[Fig 7]

S6

S61 — Extraction de l'adresse relative minimale

S62 — Soustraction de l'adresse relative minimale aux autres adresses relatives

S63 — Calcul de l'adresse absolue pour chaque couche

Europäisches
Patentamt

European
Patent Office

Office européen
des brevets

**RAPPORT DE RECHERCHE EUROPEENNE**

Numéro de la demande

EP 20 16 2645

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/088996 A1 (ROSSI FRANCESCO [US] ET AL) 29 mars 2018 (2018-03-29) | 1-7, 10-18, 21-23 | INV. G06F12/02 G06N3/04 |
| A | * abrégé * <br> * alinéas [0013] - [0052], [0057] * <br> * figures 1-5 * | 8,9,19, 20 | G06N3/063 |
| | ----- | | |
| X | US 2019/042925 A1 (CHOE BYOUNGWON [KR] ET AL) 7 février 2019 (2019-02-07) | 1-7, 10-18, 21-23 | |
| A | * abrégé * <br> * alinéas [0029] - [0042], [0058] - [0061] * <br> * figures 1a-1d * | 8,9,19, 20 | |
| | ----- | | |
| A | US 2018/136912 A1 (VENKATARAMANI GIRISH [US] ET AL) 17 mai 2018 (2018-05-17) <br> * abrégé * <br> * alinéas [0043] - [0046], [0096] - [0106] * <br> * figures 1,7 * | 1-23 | |
| | ----- | | |

**DOMAINES TECHNIQUES RECHERCHES (IPC)**

G06F
G06N

Le présent rapport a été établi pour toutes les revendications

| Lieu de la recherche | Date d'achèvement de la recherche | Examinateur |
|---|---|---|
| La Haye | 13 mai 2020 | Sabbah, Yaniv |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
...........................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 16 2645

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-05-2020

| Document brevet cité au rapport de recherche | Date de publication | Membre(s) de la famille de brevet(s) | Date de publication |
|---|---|---|---|
| US 2018088996 A1 | 29-03-2018 | AUCUN | |
| US 2019042925 A1 | 07-02-2019 | CN 110389910 A | 29-10-2019 |
| | | DE 102019106669 A1 | 17-10-2019 |
| | | US 2019042925 A1 | 07-02-2019 |
| US 2018136912 A1 | 17-05-2018 | AUCUN | |

EPO FORM P0460

Pour tout renseignement concernant cette annexe : voir Journal Officiel de l'Office européen des brevets, No.12/82

**EP 3 712 775 A1**

## RÉFÉRENCES CITÉES DANS LA DESCRIPTION

**Documents brevets cités dans la description**

- FR 1872443